(19) Europäisches Patentamt / European Patent Office / Office européen des brevets

(11) **EP 1 866 713 B1**

(12) **EUROPÄISCHE PATENTSCHRIFT**

(45) Veröffentlichungstag und Bekanntmachung des Hinweises auf die Patenterteilung:
**21.09.2011 Patentblatt 2011/38**

(21) Anmeldenummer: **06722764.5**

(22) Anmeldetag: **05.04.2006**

(51) Int Cl.:
***G05B 19/042*** *(2006.01)*

(86) Internationale Anmeldenummer:
**PCT/DE2006/000620**

(87) Internationale Veröffentlichungsnummer:
**WO 2007/112707 (11.10.2007 Gazette 2007/41)**

(54) **VERFAHREN ZUM BILDEN EINES GERÄTEINDIVIDUELLEN INFORMATIONSDATENSATZES**

METHOD FOR FORMING A DEVICE-SPECIFIC INFORMATION DATA RECORD

PROCEDE DE FORMATION D'UN JEU DE DONNEES D'INFORMATIONS PROPRE A UN APPAREIL

(84) Benannte Vertragsstaaten:
**DE FR GB IT**

(43) Veröffentlichungstag der Anmeldung:
**19.12.2007 Patentblatt 2007/51**

(73) Patentinhaber: **SIEMENS AKTIENGESELLSCHAFT
80333 München (DE)**

(72) Erfinder: **KESSELRING, Reiner
97320 Albertshofen (DE)**

(56) Entgegenhaltungen:
**DE-A1- 10 222 095      DE-U1- 9 303 092**

• **ANONYMOUS: "PROJEKTIERUNGSSYSTEM SICAM plusTOOLS (Katalog SICAM 6.2.1)" [Online] 1999, SIEMENS AG , XP002405026 Gefunden im Internet: URL:http://www.sicam.de/ Daten/plustools/ca talog/Sicam_plus_tools_ d.pdf> [gefunden am 2006-10-27] das ganze Dokument**
• **ANONYMOUS: "SICAMPAS V5.0 (Katalog SICAM 4.1.1)" [Online] 2004, SIEMENS AG , XP002405027 Gefunden im Internet: URL:http: //web.archive.org/web/20041020213 326/http: //www.sicam.de/Daten/pas/SIC4_1_1 _de.pdf> [gefunden am 2006-10-27] das ganze Dokument**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zum Bilden eines geräteindividuellen Informationsdatensatzes zur Verwendung in einem Leitgerät, an das zumindest ein elektrisches Gerät einer elektrischen Anlage, insbesondere einer Energieversorgungsanlage, anschließbar ist, wobei sich der geräteindividuelle Informationsdatensatz auf das angeschlossene elektrische Gerät bezieht und wobei eine benutzerseitig vorgegebene geräteindividuelle Information bei der Bildung des geräteindividuellen Informationsdatensatzes berücksichtigt wird. Unter dem Begriff "elektrisches Gerät" sind in diesem Zusammenhang sowohl Einzelgeräte wie beispielsweise Schutz- oder Feldgeräte als auch Gruppen oder Felder solcher Einzelgeräte zu verstehen; im letztgenannten Fall wird das "elektrische Gerät" also durch eine Mehrzahl an Einzelgeräten gebildet.

Ein Bilden geräteindividueller Informationsdatensätze für elektrische Geräte muss beispielsweise im Bereich der Schutz- und Leittechnik für Energieversorgungsanlagen durchgeführt werden. Dies soll nachfolgend anhand von Leitstationen erläutert werden, die von der Firma Siemens AG unter dem Produktnamen SICAM PAS für elektrische Leitsysteme von Energieversorgungsanlagen angeboten werden (z. B. "PROJEKTIERUNGSSYSTEM SICAMplus-TOOLS (Katalog SICAM 6.2.1)" 1999, SIEMENS AG, (URL: http://www.sicam.de/Daten/plustools/catalog/Sicam_plus_tools_ d.pdf)). Vor Inbetriebnahme ist in eine solche Leitstation u. a. einzugeben, mit welchen elektrischen Geräten (z. B. Feldgeräten, Feldern von Feldgeräten, Gruppen von Feldgeräten) die jeweilige Leitstation verbunden ist oder verbunden werden soll. Außerdem ist einzugeben, unter welchen Meldungsnummern bzw. Slave-Adressen Informationen (z. B. Messwerte), die von den angeschlossenen elektrischen Geräten an die Leitstation übermittelt werden, an eine der Leitstation übergeordnete Leitzentrale weitergesendet werden. In vergleichbarer Weise sind neben den Meldungsnummern auch Topologieinformationen für jedes an die Leitstation angeschlossene Gerät einzugeben.

Bei der genannten SICAM PAS Leitstation der Firma Siemens sind solche geräteindividuellen Informationsdatensätze, die sich auf Meldungsnummern (Slave-Adressen) oder Topologien beziehen, manuell einzugeben; das "Rangieren" von Meldungsnummern und Topologien innerhalb der Leitstation, wie eine solche Eingabe geräteindividueller Informationsdatensätze fachsprachlich auch genannt wird, ist somit relativ aufwändig.

Der Erfindung liegt die Aufgabe zugrunde, ein Verfahren zum Bilden eines geräteindividuellen Informationsdatensatzes anzugeben, das weniger Aufwand herruft als das beschriebene vorbekannte manuelle Verfahren.

Diese Aufgabe wird erfindungsgemäß dadurch gelöst, dass das Bilden des geräteindividuellen Informationsdatensatzes rechnergestützt erfolgt, indem aus einer Datenbank eine dem elektrischen Gerät zugeordnete Gerätevorlage ausgelesen wird und dieser Gerätevorlage ein Teildatensatz entnommen wird. Eine benutzerseitig vorgegebene Information wird dann als geräteindividuelle Korrekturinformation verwendet und mit dem Teildatensatz rechnergestützt verknüpft, wodurch der geräteindividuelle Informationsdatensatz gebildet wird. Der so gebildete geräteindividuelle Informationsdatensatz wird anschließend dem elektrischen Gerät zugeordnet.

Ein wesentlicher Vorteil des erfindungsgemäßen Verfahrens ist darin zu sehen, dass auf Vorlagen zurückgegriffen wird, die für die Geräte (Einzelgeräte oder Gerätegruppen) vordefiniert sind; zum Erzeugen des endgültigen geräteindividuellen Informationsdatensatzes muss dann lediglich eine Korrektureingabe durchgeführt werden, um eine Anpassung der Gerätevorlage an die konkreten Anforderungen im Einzelfall vorzunehmen.

Beispielsweise kann in der beschriebenen Art eine Bildung von Informationsdatensätzen für eine Leitstation erfolgen, indem für jedes an die Leitstation angeschlossene oder anzuschließende elektrische Gerät der für den Betrieb der Leitstation erforderliche Informationsdatensatz gebildet und in der Leitstation abgespeichert wird.

Zum Beispiel kann in der Leitstation für ein daran angeschlossenes oder anzuschließendes Feldgerät als geräteindividueller Informationsdatensatz eine oder mehrere Meldungsnummern abgespeichert werden, die von der Leitstation bei einer Übertragung von Meldungen, die auf das Feldgerät zurückgehen, an eine übergeordnete Leitzentrale weiterverwendet werden. Vorzugsweise enthält der Teildatensatz in diesem Falle eine vorgegebene Anzahl an Basisnummern, zu denen ein einziger Offsetwert als geräteindividuell vorgegebene Korrekturinformation addiert wird.

Auch kann dem elektrischen Gerät als geräteindividueller Informationsdatensatz beispielsweise eine Topologieinformation zugeordnet werden, die einen topologischen Namen des elektrischen Gerätes innerhalb der Anlage definiert. In diesem Falle wird der Teildatensatz vorzugsweise durch einen Namensbestandteil des topologischen Namens des Gerätes gebildet, wobei zu diesem Namensbestandteil ein geräteindividueller Zusatznamensteil als geräteindividuell vorgegebene Korrekturinformation hinzugefügt wird.

Bevorzugt wird der Teildatensatz durch den letzten Namensbestandteil des topologischen Namens gebildet, wobei diesem letzten Namensbestandteil der geräteindividuelle Zusatznamensteil vorangestellt wird.

Als Erfindung wird außerdem eine Leitstation mit einer Datenverarbeitungsanlage angesehen, die derart programmiert ist, dass sie einen geräteindividuellen Informationsdatensatz - wie beschrieben - bilden kann.

Auch wird ein Computerprogrammprodukt, das nach einer Installation auf einer Datenverarbeitungsanlage geeignet ist, ein Verfahren - wie beschrieben - durchzuführen, als Erfindung angesehen.

Die Erfindung wird nachfolgend anhand eines Ausführungsbeispiels näher erläutert; dabei zeigen beispielhaft:

Figur 1     eine Anordnung mit einer erfindungsgemäßen Leitstation, anhand derer das erfindungsgemäße Verfahren beispielhaft erläutert wird, und

Figur 2     die Leitstation gemäß der Figur 1 im Detail.

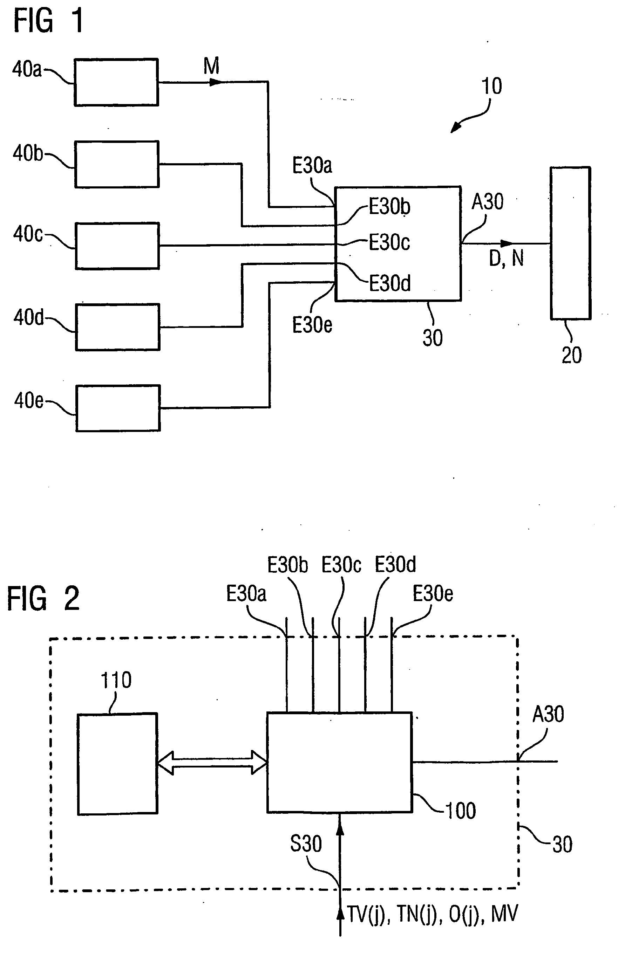

In der Figur 1 erkennt man ein Leitsystem 10 einer der Übersicht halber nicht weiter dargestellten Energieversorgungsanlage mit einer Leitzentrale 20, einer der Leitzentrale untergeordneten Leitstation 30 und einer Vielzahl an Feldgeräten 40a, 40b, 40c, 40d und 40e, die an Anschlüssen E30a-E30e der Leitstation 30 angeschlossen sind.

Die Feldgeräte 40a-40e erfassen beispielsweise Messwerte M, die sich auf die Energieversorgungsanlage beziehen, und übertragen diese gemäß einem Master-Protokoll zu der Leitstation 30. Die Leitstation 30 wertet die Messwerte M aus und erzeugt mit den Messwerten M an ihrem Ausgang A30 Meldungen in Form von Datentelegrammen D, die in einem Slave-Protokoll zu der Leitzentrale 20 übermittelt werden.

Die Leitzentrale 20 ist derart programmiert, dass sie zu jeder Meldung, also zu jeder Information und zu jedem Messwert M eines Datentelegramms D, eine eindeutige Meldungsnummer N erwartet. Eine Meldungsnummer N gibt dabei eindeutig an, um welche Art Information es sich handelt und wie diese Information weiter zu verarbeiten ist. Beispielsweise kann die Meldungsnummer angeben, dass es sich bei der Information um einen Messwert M handelt und dass der Messwert M von dem Feldgerät 40a erfasst wurde. Alternativ kann die Meldungsnummer N auch angeben, dass die Leitstation 30 selbst die entsprechende Information erzeugt hat, indem es beispielsweise die Messwerte M der Felgeräte 40a-40e ausgewertet hat und damit eigene Auswertinformationen gebildet hat.

Zu beachten ist, dass sich jede Meldungsnummer N nur auf eine einzige Meldungsart beziehen sollte, damit die Leitzentrale 20 die eingehenden Datentelegrame D korrekt verarbeiten kann. Beim Rangieren der Informationen innerhalb der Leitstation 20 - also bei der Festlegung, welche Informationen erfasst und ggf. zusammengefasst sowie weitergeleitet werden sollen - muss also innerhalb der Leitstation 30 festgelegt werden, wie die Meldungsnummern N zugeordnet werden. Bei Verfahren nach dem Stand der Technik, wie beispielsweise bei der eingangs beschriebenen Leitstation SICAM PAS der Siemens AG, werden für jedes an die Leitstation 30 angeschlossene Feldgerät Meldungsnummern N nach Kundenvorgaben per Hand eingegeben; dies bedeutet beispielsweise, dass im Falle von 500 Meldungsarten für jedes der an die Leitstation 30 angeschlossenen Feldgeräte 40a-40e jeweils 500 Meldungsnummern definiert und eingegeben werden müssen, um die auftretenden Meldungen zu definieren.

Um eine solche Eingabe zu vereinfachen, ist bei dem hier beschriebenen Ausführungsbeispiel der Erfindung vorgesehen, für die Feldgeräte 40a-40e jeweils eine Meldungsnummernvorlage MV (vgl. Figur 2) zu verwenden, die anschließend lediglich mit einem feldgeräteindividuellen Offsetwert beaufschlagt wird. In der Meldungsnummernvorlage MV sind beispielsweise 500 Basiswerte N(1)-N(500) fest vorgegeben und definiert. Im Rahmen des Rangierens der Meldungsnummern innerhalb der Leitstation 30 wird dann für jedes an die Leitstation 30 angeschlossene Feldgerät 40a-40e anschließend jeweils nur ein individueller Offsetwert O(j) vorgegeben, der zu den in der Meldungsnummernvorlage MV abgespeicherten Basiswerten addiert wird. "j" soll in diesem Zusammenhang eine Variable sein, die das jeweilige Feldgerät eindeutig identifiziert; es soll dabei beispielsweise gelten: j=1 für Feldgerät 40a, j=2 für Feldgerät 40b, j=3 für Feldgerät 40c, j=4 für Feldgerät 40d, j=5 für Feldgerät 40e.

Die resultierenden feldgeräteindividuellen Meldungsnummern N(j,1) bis N(j,500) ergeben sich dann durch eine automatische Addition innerhalb der Leitstation 30 gemäß:

$$N(j, i) = N(i) + O(j) \text{ mit } i = 1...500 \text{ und } j = 1...4$$

Durch die Eingabe eines einzigen Offsetwerts O(j) pro Feldgerät ist es somit möglich, 500 individuelle Meldungsnummern als Informationsdatensatz in einem einzigen Arbeitsschritt zu erzeugen. Im Unterschied zum Stand der Technik ist es also nicht erforderlich, für jedes Feldgerät 40a-40e jeweils 500 Meldungsnummern per Hand einzugeben; stattdessen werden diese durch Eingabe eines einzigen Offsetwerts O(j) pro Feldgerät und durch nachfolgende maschinelle Addition innerhalb der Leitstation 30 automatisch erzeugt.

In entsprechender Weise kann den Feldgeräten 40a-40e in der Leitstation 30 als Informationsdatensatz jeweils auch ein topologischer Name T(j) zugeordnet werden. Innerhalb des topologischen Namens bzw. Baumes kann beispielsweise unterhalb der Leitstation 30 eine Spannungsebene, unterhalb der Spannungsebene ein Feld und unterhalb des Feldes eine benutzerdefinierte Gruppe angelegt werden. Der resultierende topologische Namen T(j) weist dann beispielsweise die Form auf:

T(j) = <Name der Station>\<Name der Spannungsebene>\<Name des Feldes>\<Name der benutzerdefinierte Gruppe>\<Wert(j) >

Bei der Eingabe eines solchen topologischen Namens wird für jedes der Feldgeräte 40a-40e jeweils eine Gerätevorlage in Form einer Topologievorlage TV(j) verwendet, in der als Teildatensatz T1(j) vorab definierte und abgespeicherte Werte Wert(j) für beispielsweise den letzte Bestandteil des Namens

$$T1(j) = <Wert(j)>$$

fest vorgegeben sind. Zur Definition des vollständigen topologischen Namens T(j) während des Rangierens der Topologie innerhalb der Leitstation 30 muss dann lediglich noch der erste Teil, hier beispielsweise also der Name der Leitstation, der Name der Spannungsebene, der Name des Feldes und der Name der benutzerdefinierte Gruppe als geräteindividueller bzw. feldgeräteindividueller Zusatznamensteil TN(j) eingegeben werden.

Die Leitstation 30 bildet den vollständigen topologischen Namen T(j) dann selbsttätig, indem sie den feldgeräteindividuellen Zusatznamensteil

TN(j)= <Name der Station>\<Name der Spannungsebene>\<Name des Feldes>\<Name der benutzerdefinierte Gruppe> dem vordefinierten Bestandteil T1(j)=<Wert(j)> voranstellt. Es gilt also:

$$T(j) = TN(j) + T1(j)$$

In der Figur 2 ist ein Ausführungsbeispiel für die Leitstation 30 gemäß der Figur 1 dargestellt. Man erkennt eine interne Datenverarbeitungsanlage 100, in die sich geräteindividuelle Topologievorlagen TV(j), geräteindividuelle Zusatznamensteile TN(j), eine geräteübergreifende (beispielsweise gerätetypspezifische) Meldungsnummernvorlage MV sowie geräteindividuelle Offsetwerte O(j) eingeben lassen. Die Datenverarbeitungsanlage 100 ermittelt dann selbsttätig durch Addition die resultierenden geräteindividuellen Meldungsnummern N(j,1) bis N(j,500) gemäß:

$$N(j, i) = N(i) + O(j)$$

und speichert diese in ihrem Speicher 110 ab.

Außerdem bildet sie die vollständigen topologischen Namen T(j) für die Feldgeräte 40a-40e durch Zusammensetzen der Bestandteile T1(j) und TN(j), wie dies im Zusammenhang mit der Figur 1 beschrieben wurde gemäß:

$$T(j) = TN(j) + T1(j)$$

und speichert diese in ihrem Speicher 110 ab.

Bei dem Ausführungsbeispiel gemäß der Figur 2 werden die Meldungsnummernvorlage MV und die Topologievorlagen TV(j) über den Anschluss S30 in die Leitstation 30 eingegeben; alternativ können diese auch in einer Datenbank des Speichers 110 abgespeichert sein, so dass eine Eingabe nicht erforderlich ist. Die Meldungsnummernvorlage MV und die Topologievorlagen TV(j) können beispielsweise in dem Speicher 110 fest vorinstalliert sein.

**Patentansprüche**

1. Verfahren zum Bilden eines geräteindividuellen Informationsdatensatzes (N(j, i), T(j)) zur Verwendung in einem Leitgerät (30), an das zumindest ein elektrisches Gerät (40a-40e) einer elektrischen Anlage (10) anschließbar ist, wobei sich der geräteindividuelle Informationsdatensatz auf das angeschlossene elektrische Gerät (40a-40e) bezieht und wobei eine benutzerseitig vorgegebene geräteindividuelle Information (O(j), TN(j)) bei der Bildung des geräteindividuellen Informationsdatensatzes berücksichtigt wird,

**dadurch gekennzeichnet, dass** das Bilden des geräteindividuellen Informationsdatensatzes rechnergestützt erfolgt, indem

- aus einer Datenbank eine dem angeschlossenen elektrischen Gerät zugeordnete Gerätevorlage (TV(j), MV) ausgelesen wird und dieser Gerätevorlage ein Teildatensatz (T1(j), N(i)) entnommen wird,

- die benutzerseitig vorgegebene Information (O(j), TN(j)) als geräteindividuelle Korrekturinformation verwendet wird und diese mit dem Teildatensatz (N(i), T1(j)) rechnergestützt verknüpft wird, wobei der geräteindividuelle Informationsdatensatz gebildet wird, und

- der so gebildete geräteindividuelle Informationsdatensatz (N(j, i), T(j)) dem elektrischen Gerät (40a-40e) zugeordnet wird.

2. Verfahren nach Anspruch 1,
**dadurch gekennzeichnet, dass** die Bildung des Informationsdatensatzes zur Verwendung in einer Leitstation (30) eines Leitsystems (10) erfolgt, indem für jedes an die Leitstation angeschlossene oder anzuschließende elektrische Gerät (40a-40e) der für den Betrieb der Leitstation erforderliche Informationsdatensatz gebildet und in der Leitstation gespeichert wird.

3. Verfahren nach Anspruch 2,
**dadurch gekennzeichnet, dass** in der Leitstation für ein daran angeschlossenes Feldgerät (40a-40e) als geräteindividueller Informationsdatensatz eine oder mehrere Meldungsnummern (N(j, i)) abgespeichert werden, die von der Leitstation (30) bei einer Übertragung von Meldungen, die auf das Feldgerät (40a-40e) zurückgehen, an eine übergeordnete Leitzentrale (20) weiterverwendet werden.

4. Verfahren nach Anspruch 3,
**dadurch gekennzeichnet,**

   - **dass** der Teildatensatz eine vorgegebene Anzahl an Basisnummern (N(i)) enthält und
   - **dass** zu allen diesen Basisnummern ein Offsetwert als (O(j)) geräteindividuell vorgegebene Korrekturinformation addiert wird.

5. Verfahren nach Anspruch 1 oder 2,
**dadurch gekennzeichnet, dass** dem Gerät als geräteindividueller Informationsdatensatz eine Topologieinformation (T(j)) zugeordnet wird, die einen topologischen Namen des Gerätes (40a-40e) innerhalb der Anlage definiert.

6. Verfahren nach Anspruch 5,
**dadurch gekennzeichnet, dass** der Teildatensatz (T1(j)) durch einen Namensbestandteil des topologischen Namens des Gerätes gebildet wird und dass zu diesem Namensbestandteil ein geräteindividueller Zusatznamensteil (TN(j)) als geräteindividuell vorgegebene Korrekturinformation hinzugefügt wird.

7. Verfahren nach Anspruch 6,
**dadurch gekennzeichnet, dass** der Teildatensatz durch den letzten Namensbestandteil des topologischen Namens gebildet wird und dass diesem letzten Namensbestandteil der geräteindividuelle Zusatznamensteil vorangestellt wird.

8. Leitstation mit einer Datenverarbeitungsanlage, die derart programmiert ist, dass sie eine Bildung eines geräteindividuellen Informationsdatensatzes (N(j, i)) gemäß einem Verfahren nach einem der voranstehenden Ansprüche 1-7 vornimmt.

9. Computerprogrammprodukt, das nach einer Installation auf einer Datenverarbeitungsanlage geeignet ist, beim Ablaufen auf der Datenverarbeitungsanlage ein Verfahren zum Bilden eines geräteindividuellen Informationsdatensatzes (N(j, i)) nach einem der Ansprüche 1 bis 7 durchzuführen.

**Claims**

1. Method for forming a device-specific information data record (N(j,i), T(j)) for use in a control station (30) to which it is possible to connect at least one electrical device (40a-40e) in an electrical installation (10), where the device-specific information data record relates to the connected electrical device (40a-40e) and where device-specific information (0(j), TN(j)) prescribed by the user is taken into account when forming the device-specific information data record,
**characterized in that**
the device-specific information data record is formed with the aid of a computer by

- reading a device template (TV(j), MV) associated with the connected electrical device from a database and taking a data subrecord (T1(j), N(i)) from this device template,
- using the information (0(j), TN(j)) prescribed by the user as device-specific correction information and logically combining this correction information with the data subrecord (N(i), T1(j)) with the aid of a computer, with the device-specific information data record being formed, and
- associating the device-specific information data record (N(j,i), T(j)) formed in this manner with the electrical device (40a-40e).

**2.** Method according to Claim 1,
**characterized in that**
the information data record for use in a control station (30) in a control system (10) is formed by forming, for each electrical device (40a-40e) which is connected or to be connected to the control station, the information data record required for operation of the control station and storing it in the control station.

**3.** Method according to Claim 2,
**characterized in that**
the control station is used to store one or more message numbers (N(j,i)) for a field device (40a-40e) connected thereto as a device-specific information data record, and the control station (30), when transmitting messages which originate from the field device (40a-40e), forwards these message numbers to a superordinate control center (20).

**4.** Method according to Claim 3,
**characterized**

- **in that** the data subrecord contains a prescribed number of base numbers (N(i)), and
- **in that** all of these base numbers have an offset value added to them as (0(j)) correction information prescribed on a device-specific basis.

**5.** Method according to Claim 1 or 2,
**characterized in that**
the device-specific information data record associated with the device is topology information (T(j)) which defines a topological name for the device (40a-40e) within the installation.

**6.** Method according to Claim 5,
**characterized in that**
the data subrecord (T1(j)) is formed by a name component of the topological name of the device, and **in that** this name component has a device-specific supplementary name element (TN(j)) added to it as correction information prescribed on a device-specific basis.

**7.** Method according to Claim 6,
**characterized in that**
the data subrecord is formed by the last name component of the topological name, and **in that** this last name component has the device-specific supplementary name element placed in front of it.

**8.** Control station having a data processing installation which is programmed such that it can form a device-specific information data record (N(j,i)) in line with a method according to one of the preceding Claims 1 - 7.

**9.** Computer program product which, following installation on a data processing installation, is suitable for carrying out a method for forming a device-specific information data record (N(j,i)) according to one of Claims 1 to 7 when running on the data processing installation.

## Revendications

**1.** Procédé de formation de données d'information propre à un appareil à utiliser dans un appareil ( 30 ) de conduite auquel au moins un appareil ( 40a, 40e ) électrique d'une insolation ( 10 ) électrique peut être raccordé, dans lequel le jeu de données d'information propre à un appareil se rapporte à l'appareil ( 40a, 40e ) électrique raccordé et dans lequel une information ( O (j) , TN(j) ) propre à l'appareil prescrite côté utilisateur est prise en compte lors de la formation du jeu de données d'information propre à un appareil,

**caractérisé, en ce que**
la formation du jeu de données d'information propre à un appareil s'effectue avec assistance informatique, en

- lisant dans une base de données un modèle ( TV(j), MV ) d'appareil associé à l'appareil électrique raccordé et en prélevant de ce modèle d'appareil un jeu ( T1(j), N(i) ) partiel de données,
- en utilisant l'information ( O (j) , TN (j) ) prescrite côté utilisateur comme information de correction propre à l'appareil et en la combinant avec assistance informatique au jeu ( N(i), T1(j) ) partiel de données, le jeu de données d'information propre à l'appareil étant ainsi formé, et
- en associant le jeu ( N(j, i), T(j) ) de données d'information propre à un appareil ainsi formé à l'appareil ( 40a à 40e ) électrique.

2. Procédé suivant la revendication 1,
   **caractérisé, en ce que**
   l'on effectue la formation du jeu de données d'information à utiliser dans un poste ( 30 ) de conduite d'un système ( 10 ) de conduite en formant pour chaque appareil ( 40a à 40e ) électrique raccordé ou à raccorder au poste de conduite le jeu de données d'information nécessaire pour le fonctionnement du poste de conduite et en le mémorisant dans le poste de conduite.

3. Procédé suivant la revendication 2,
   **caractérisé, en ce que**
   l'on mémorise dans le poste de conduite pour un appareil ( 40a à 40e ) de terrain qui y est raccordé, comme jeu de données d'information propre à un appareil, un ou plusieurs numéros ( N(j, i) ) de message, qui sont utilisés encore par le poste ( 30 ) de conduite, lors d'une transmission de messages qui se rapportent à l'appareil ( 40a à 40e ) de terrain à une centrale ( 20 ) de conduite supérieure hiérarchiquement.

4. Procédé suivant la revendication 3,
   **caractérisé,**

   - **en ce que** le jeu partiel de données contient un nombre prescrit de numéros ( N(i) ) de base et
   - **en ce qu'**il est ajouté, à tous ces numéros de base, une valeur de décalage en tant qu'information de correction prescrite propre à un appareil ( O (j) ).

5. Procédé suivant la revendication 1 ou 2,
   **caractérisé, en ce que**
   l'on associe à l'appareil, comme jeu de données d'information propre à un appareil, une information ( T (j) ) de topologie, qui définit un nom topologique de l'appareil ( 40a à 40e ) dans l'installation.

6. Procédé suivant la revendication 5,
   **caractérisé, en ce que**
   l'on forme le jeu ( T1 (j) ) partiel de données par un constituant du nom topologique de l'appareil et **en ce que** l'on ajoute à ce constituant du nom, en tant qu'information de correction prescrite propre à un appareil, une partie ( TN (j) ) supplémentaire de nom propre à un appareil.

7. Procédé suivant la revendication 6,
   **caractérisé, en ce que**
   l'on forme le jeu partiel de données par le dernier constituant du nom topologique et **en ce que** l'on met devant ce dernier constituant du nom la partie de nom supplémentaire propre à un appareil.

8. Poste de conduite comprenant une installation de traitement de données qui est programmée de manière à effectuer, suivant un procédé selon l'une des revendications précédentes 1 à 7, une formation d'un jeu ( N (j, i) ) de données d'information propre à un appareil.

9. Produit de programme informatique qui, après avoir été installé sur une installation de traitement de données, est propre à effectuer, en passant sur l'installation de traitement de données, un procédé de formation d'un jeu ( N(j, i) ) de données d'information propre à un appareil suivant l'une des revendications 1 à 7.

## FIG 1

## FIG 2

**IN DER BESCHREIBUNG AUFGEFÜHRTE DOKUMENTE**

**In der Beschreibung aufgeführte Nicht-Patentliteratur**

- PROJEKTIERUNGSSYSTEM SICAMplusTOOLS (Katalog SICAM 6.2.1). SIEMENS AG, 1999